# EUROPÄISCHE PATENTSCHRIFT

(11) **EP 1 247 186 B1**
(45) Veröffentlichungstag und Bekanntmachung des Hinweises auf die Patenterteilung: **17.10.2007**
(21) Anmeldenummer: 00992081.0
(22) Anmeldetag: 22.12.2000
(51) Int. Cl.: G06F 12/08

(54) **SPEICHERZUGRIFFSVERFAHREN UND SCHALTUNGSANORDUNG**
MEMORY ACCESS METHOD AND A CIRCUIT ARRANGEMENT
PROCEDE D'ACCES A UNE MEMOIRE ET ENSEMBLE CIRCUIT

(30) Priorität: 11.01.2000 EP 00100508
(43) Veröffentlichungstag der Anmeldung: 09.10.2002
(73) Patentinhaber: Infineon Technologies AG, 81669 München (DE)
(72) Erfinder: GAMMEL, Berndt, 85570 Marktschwaben (DE); SMOLA, Michael, 80636 München (DE)
(74) Vertreter: Epping - Hermann - Fischer
(86) Internationale Anmeldenummer: PCT/EP2000/013134
(87) Internationale Veröffentlichungsnummer: WO 2001/052069

(56) Entgegenhaltungen:
- US-A- 4 932 053
- US-A- 5 500 601
- US-A- 5 765 194

## Beschreibung

Die Erfindung betrifft ein Verfahren zum Zugriff eines Mikroprozessors auf einen Speicher, bei dem ein Cache-Speicher vorgesehen ist, in dem Teile des Inhaltes des Speichers zwischenspeicherbar sind, bei dem der Mikroprozessor einen gespeicherten Datenwert anfordert, bei dem festgestellt wird, ob der angeforderte gespeicherte Datenwert im Cache-Speicher enthalten ist, und bei dem dann, wenn der Datenwert im Cache-Speicher nicht enthalten ist, der Datenwert aus dem Speicher ausgelesen wird, und bei dem ein Steuersignal erzeugt wird, das dann, wenn der Datenwert im Cache-Speicher enthalten ist, in Abhängigkeit des Steuersignals den Datenwert entweder aus dem Cache-Speicher oder aus dem Speicher ausliest.

Die Erfindung betrifft außerdem eine Schaltungsanordnung zur Durchführung eines solchen Verfahrens.

Mikroprozessorsysteme benötigen einen Speicher, um dauerhaft oder flüchtig zu verarbeitende Daten oder Programme abzuspeichern. Bei der Abarbeitung des Programms greift der Mikroprozessor auf den Speicher zu, um aktuell benötigte Programmteile oder Daten zu laden. Meist ist der Speicher in einem integrierten Halbleiterchip als separater, externer Schaltungsblock neben dem Mikroprozessor angeordnet. Zugriffe auf den externen Speicher sind daher relativ langsam.

Zur Beschleunigung von Speicherzugriffen werden sogenannte Cache-Speicher verwendet. Sie dienen dazu, die Latenzzeiten bei Zugriffen auf die externen Speicher zu vermeiden, indem oft benötigte Daten oder Instruktionen im Cache-Speicher zwischengespeichert werden. Die Cache-Speicher sind gegenüber den externen Speichern klein und schaltungstechnisch so ausgeführt, daß sie auf eine Anfrage schnell antworten. Cache-Speicher können zusammen mit dem Mikroprozessor auf dem gleichen Halbleiterchip integriert werden. Es werden sowohl Leseals auch Schreibzugriffe über den Cache-Speicher abgewickelt werden.

Eine Leseanfrage des Mikroprozessors an den Speicher unter Verwendung von externem Speicher und Cache-Speicher läuft wie folgt ab. Zuerst wird überprüft, ob das angefragte Datum im Cache-Speicher enthalten ist. Wenn festgestellt wird, daß das Datum nicht im Cache-Speicher zwischengespeichert ist, sogenannter Cache-Miss, wird das Datum aus dem langsameren externen Speicher in den Cache-Speicher nachgeladen und dabei außerdem an den Mikroprozessor bereitgestellt. Wenn das angeforderte Datum im Cache-Speicher enthalten ist, sogenannter Cache-Hit, wird es sofort an den Mikroprozessor ausgelesen und von diesem verarbeitet.

Mikroprozessoren finden unter anderem Anwendung in sicherheitskritischen Systemen, beispielsweise in Chipkarten. Der Mikroprozessor wird dort unter anderem verwendet, um den Datenverkehr zwischen der Chipkarte und einem Lesegerät zu verschlüsseln, so daß ausreichend Sicherheit vor betrügerischen Angriffen zum Ausspähen der geheimen Informationen gewährleistet ist. Eine Angriffsart besteht darin, die Charakteristik des Stromverbrauchs des Mikroprozessors zu messen. Aus dem charakteristischen Stromprofil können Rückschlüsse auf den Programmablauf gezogen werden. Cache-Miss- und Cache-Hit-Ereignisse sind anhand des Stromprofils genau zu erkennen. Daraus könnten Rückschlüsse auf den verwendeten Ver- und Entschlüsselungsalgorithmus aufgrund der Anzahl und Lage der verwendeten Speicherzugriffe gezogen werden; es wäre dann möglich, weitere Rückschlüsse auf den speziellen Programmablauf zu ziehen, und anhand der Stromprofile Triggerpunkte zu erhalten, auf denen andere Meßverfahren aufsetzen.

Das jeweilige Stromprofil für Cache-Hit und Cache-Miss ist unterschiedlich. Während bei einem Cache-Hit sofort Daten aus dem Cache-Speicher zum Mikroprozessor ausgelesen werden, daudem Cache-Speicher zum Mikroprozessor ausgelesen werden, dauert es bei einem Cache-Miss einige Zeit, bis der Cache-Speicher aus dem externen Speicher nachgeladen wird. Während der Anfangsphase ist daher der Stromverbrauch bei einem Cache-Miss niedriger als bei einem Cache-Hit. Während des Nachladens des Cache-Speichers bei einem Cache-Miss erhöht sich dann der Stromverbrauch aufgrund der Vielzahl der Schaltvorgänge im Chip während des Nachladevorgangs. Der Stromverbrauch ist über die externen Anschlußpins der integrierten Schaltung oder der Stromzuführungsanschlüsse der Chipkarte meßbar.

Ein Datenzugriff mit einem Cache-Miss dauert also relativ lange, und der Nachladevorgang bewirkt einen relativ hohen Stromverbrauch der Zentraleinheit des Mikroprozessors. Cache-Hit- und Cache-Miss-Ereignisse führen dazu, daß die Zentraleinheit verschieden lange auf die Bereitstellung der Daten zu warten hat. Der Wartevorgang hat einen charakteristisch niedrigen Stromverbrauch der Zentraleinheit. Insgesamt liegt der Stromverbrauch bei einem Cache-Miss höher als bei einem Cache-Hit. Mittels statistischer Auswerteverfahren unter Anwendung von Korrelationen auf das Aktivitätsmuster des Stromprofils können daraus Rückschlüsse auf die Verarbeitungsschritte innerhalb des Mikroprozessors und die verarbeiteten Daten gewonnen werden. Die Anwendung eines solchen herkömmlichen Mikroprozessors in sicherheitsrelevanten, geheime Informationen verarbeitenden Systemen ist daher problematisch.

In der US 5 765 194 A ist ein Cache-Speicher beschrieben, bei dem trotz eines Cache-Hit ein Cache-Miss signalisiert wird. Dadurch werden mögliche Zugriffskollisionen auf den Cache-Speicher vermieden. Eine deterministische Steuerung schaltet bei einem Cache-Hit auf einen Cache-Miss um.

In der US 4 932 053 ist ein zufallsgesteuerter Zugriff auf Dummy-Speicherzellen beschreiben, um das Stromprofil zu verschleiern. Die US 5 500 601 bezieht sich allgemein auf das schleiern. Die US 5 500 601 bezieht sich allgemein auf das Problem der Abhörbarkeit des Stromprofils.

Die Aufgabe der Erfindung besteht darin, ein Verfahren für einen Zugriff eines Mikroprozessors auf einen Speicher unter Anwendung eines Cache-Speichers anzugeben, welches eine höhere Abhörsicherheit bietet.

Eine weitere Aufgabe besteht darin, eine Schaltungsanordnung anzugeben, die eine höhere Abhörsicherheit gewährt.

Gemäß der Erfindung wird die Aufgabe betreffend das Verfahren durch ein Verfahren gelöst zum Zugriff eines Mikroprozessors auf einen Speicher, bei dem ein Cache-Speicher vorgesehen ist, in dem Teile des Inhaltes des Speichers zwischenspeicherbar sind, bei dem der Mikroprozessor einen gespeicherten Datenwert anfordert, bei dem festgestellt wird, ob der angeforderte gespeicherte Datenwert im Cache-Speicher enthalten ist, und bei dem dann, wenn der Datenwert im Cache-Speicher nicht enthalten ist, der Datenwert aus dem Speicher ausgelesen wird, wobei ein Steuersignal erzeugt wird, das dann, wenn der Datenwert im Cache-Speicher enthalten ist, in Abhängigkeit des Steuersignals den Datenwert entweder aus dem Cache-Speicher oder aus dem Speicher ausliest, wobei das Steuersignal in zufallsgesteuerter Weise erzeugt wird.

Betreffend die Schaltungsanordnung wird die Aufgabe durch eine Schaltungsanordnung gelöst, die umfaßt: eine zentrale Verarbeitungseinheit, einen Speicher, einen Cache-Speicher und eine Steuerungseinrichtung, die mit der zentralen Verarbeitungseinheit und dem Cache-Speicher verbunden ist, wobei die Steuerungseinrichtung enthält: einen Zufallsgenerator zur Erzeugung eines zufallsgesteuerten Signals, eine Einrichtung zur Feststellung, ob ein von der zentralen Verarbeitungseinheit angefragter Datenwert im Cache-Speicher enthalten ist oder nicht, einen Anschluß zur Bereitstellung eines Signals, das angibt, daß der Datenwert nicht im Cache-Speicher enthalten ist, und eine Umschalteinrichtung, die vom Zufallsgenerator steuerbar ist, und die eingangsseitig mit dem Anschluß und der Einrichtung zur Feststellung verbunden ist, und ausgangsseitig mit der zentralen Verarbeitungseinheit gekoppelt ist, um ein Auslesen entweder aus dem Speicher oder aus dem Cache-Speicher in Abhängigkeit von einem von der Umschalteinrichtung an die zentrale Verarbeitungseinrichtung übermittelten Signal zu steuern.

Es können einer oder mehrere Cache-Speicher vorhanden sein. Die beschriebene Schaltungsanordnung und das Verfahren können zweckmäßigerweise für alle Cache-Speicher angewandt werden. Die genannte Steuereinrichtung kann entweder zentral für alle Cache-Speicher gemeinsam verwendet werden oder mehrfach vorhanden sein und einzelnen Cache-Speichern individuell zugeordnet werden. Es sind Cache-Speicher für zu verarbeitende Daten und Cache-Speicher für Instruktionen als auch Cache-Speicher für Daten und Instruktionen gemeinsam bekannt, sogenannte "Unified Caches". Der Begriff "Datenwert" umfaßt sowohl zu verarbeitende Daten als auch Instruktionen.

Bei dem erfindungsgemäßen Verfahren bzw. der Schaltungsanordnung wird die Korrelation von Stromsignaturen, die bei Cache-Hits und Cache-Misses auftreten, zum Programmablauf verschleiert. Die Erfindung sieht hierzu ein Steuersignal vor, durch welches ein zusätzlicher Eingriff in die Speicherzugriffssteuerung möglich ist. Dadurch kann dann, wenn ein Cache-Hit festgestellt wird, trotzdem der Speicherzugriff in Form eines Cache-Miss abgewickelt werden. Praktischerweise werden Cache-Hits in geeigneter Weise durch Cache-Misses ersetzt. In die Cache-Steuerungslogik wird neben deren Abhängigkeit vom Cache-Inhalt und der Zugriffsadresse außerdem mittels des Steuersignals eingegriffen, um Cache-Misses zusätzlich einzufügen. Das Steuersignal wird durch andere Parameter als die Trefferquote bei Cache-Hits gesteuert. Dadurch wird erreicht, daß das von außen meßbare Stromprofil des Mikroprozessors und die Abfolge von Cache-Misses und Cache-Hits nicht mehr mit dem Programmablauf übereinstimmen. Ein Rückschließen auf den Programmablauf durch Messung des Stromprofils wird daher wesentlich erschwert. schließen auf den Programmablauf durch Messung des Stromprofils wird daher wesentlich erschwert.

Das Steuersignal wird unter Anwendung von Zufallsmustern erzeugt. Die Erzeugung von Zufallsmustern ist hinreichend bekannt. Hierzu eignen sich Zahlenfolgen, die so erzeugt werden, daß sie physikalisch zufällig oder pseudo-zufällig sind.

Die Zufallsfolge wird durch eine von einem Zufallsgenerator ausgegebene Zufallszahl erzeugt. Es ist zweckmäßig, die Zufälligkeit zusätzlich zu modifizieren. Beispielsweise kann die Cache-Steuerung die Anzahl der Cache-Misses und Cache-Hits in einem vorgegebenen Zeitraum protokollieren und zusätzliche Cache-Miss-Ereignisse so einstellen, daß sich gemittelt über den Zeitraum eine Gleichverteilung von Cache-Misses und Cache-Hits entsprechend einem Vorgabewert einstellt. Hierzu werden in Abhängigkeit von dieser Statistik zusätzliche Cache-Misses erzeugt. Die Cache-Miss-Rate wird entsprechend der Statistik dynamisch nachgestellt, so daß sich im eingeschwungenen Zustand ein festes Verhältnis zwischen der Anzahl von Cache-Misses und Cache-Hits im vorgegebenen Zeitintervall einstellt. Es ist dann nicht mehr möglich, aufgrund der Abfolge von Cache-Miss- oder Cache-Hit-Ereignissen auf den Programmablauf des Mikroprozessors rückzuschließen.

Ein Cache-Miss führt zu einer hohen Arbeitsbelastung des Mikroprozessors. Die Rechenleistung des Systems sinkt dann. Es ist daher zweckmäßig, daß gerade dann Cache-Misses zusätzlich erzeugt werden, wenn die Auslastung des Mikroprozessors gering ist. Bei hoher Auslastung des Mikroprozessors wird die Cache-Miss-Rate verringert. Das Einfügen von zusätzlichen Cache-Misses wird zweckmäßigerweise abhängig von der abzuarbeitenden Software ausgeführt. Bei dieser Ausführungsform kann über die Software ein jeweils an die Applikation angepaßter Kompromiß zwischen Rechenleistung und Sicherheit eingestellt werden.

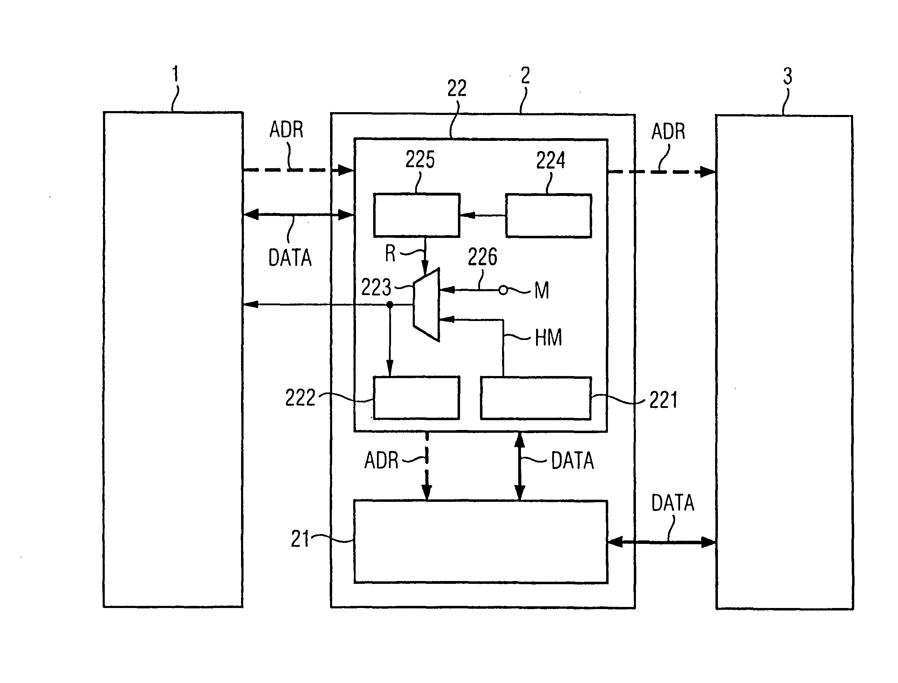

Die Erfindung wird nachfolgend anhand der in der Zeichnung dargestellten Figur näher erläutert.

Die Figur zeigt einen Mikroprozessor mit externem Speicher. Der Mikroprozessor umfaßt eine zentrale Verarbeitungseinheit (CPU) 1 und eine Cache-Einrichtung 2. CPU und Cache Einrichtung sind auf dem gleichen Halbleiterchip integriert. Die Cache-Einrichtung umfaßt das Speicherzellenfeld 21 sowie die Cache-Steuerungseinrichtung 22. Der Mikroprozessor ist mit einem externen Speicher 3 verbunden, der auf einem weiteren Halbleiterchip realisiert sein kann oder auf dem gleichen Halbleiterchip integriert ist. Das dargestellte Mikroprozessorsystem kann beispielsweise in einer Chipkarte angeordnet sein, die mit einem Lesegerät, beispielsweise einem Bankautomaten, kommuniziert. Der Mikroprozessor berechnet die Ver- und Entschlüsselung des Datenverkehrs zwischen Lesegerät und Chipkarte. Während des von der CPU 1 abgearbeiteten Programms werden Daten, Programmbefehle und Adressen- oder Page-Zugriffstabellen virtueller Speichersysteme aus dem Speicher abgerufen. Diese Informationen sind im externen Speicher 3 abgelegt. Da Zugriffe auf den externen Speicher relativ lange dauern, wird ein Teil der Daten des Speichers 3 im Cache-Speicher 21 zwischengepuffert. Der Cache-Speicher 2 ist schaltungstechnisch so ausgeführt, daß er angeforderte Daten schneller der CPU bereitstellen kann als der externe Speicher 3. Das Zusammenwirken zwischen Cache-Speicher 21 und externem Speicher 3 wird von der Cache-Steuerungseinrichtung 22, sogenannter Cache-Controller, abgewickelt.

Bei einem Lesevorgang der CPU 1 wird die Adresse ADR an den Cache-Controller 22 übermittelt. Der Cache-Controller 22 überprüft den Inhalt des Cache-Speichers 21 daraufhin, ob die angeforderte Information dort zwischengespeichert ist. Hierzu werden die Adressen ADR an das Speicherzellenfeld 21 übermittelt. Eine Trefferlogikeinrichtung 221 stellt fest, ob das angeforderte Datum im Cache-Speicher 21 enthalten ist. Ein Ausgangssignal HM der Trefferlogik 221 zeigt das Ergebnis dieser Feststellung an. Das Signal HM wird an die CPU 1 übertragen. Der Zustand des Signals HM zeigt der CPU 1 an, ob sich die angeforderten Daten im Cache-Speicher 21 befinden oder im externen Speicher 3. Abhängig davon wird der Datenwert entweder direkt aus dem Cache-Speicher 21 geladen oder aus dem externen Speicher 3.

Wenn die Daten im Cache-Speicher 21 vorliegen (Cache-Hit), werden diese über den Datenbus als Datensignal DATA an den Cache-Controller 22 übertragen, welcher sie weiter an die CPU 1 leitet. Wenn die angeforderten Daten nicht im Cache-Speicher 21 enthalten sind (Cache-Miss), erfolgt ein länger dauernder Zugriff auf den externen Speicher 3. Hierzu werden die Adressen ADR an den externen Speicher 3 vom Cache-Controller 22 übertragen. Die angeforderten Daten werden zuerst an das Cache-Speicherzellenfeld 21 übertragen und dort zwischengespeichert, so daß sie bei einem nächsten Zugriff dort vorhanden sind und schneller abgefragt werden können als bei einem Zugriff aus dem externen Speicher 3. Über den Cache-Controller 22 werden die Daten DATA dann an die CPU 1 weitergeleitet. Je nach dem vom Cache-Controller 22 abgearbeiteten Zugriffssteuerungsverfahren werden nicht nur die angeforderten Daten selbst, sondern auch ein geeignetes Umfeld dieser Daten im Cache-Speicherzellenfeld 21 zwischengepuffert. Die Steuerung dieses Nachfüllvorgangs wird von der Füllogikeinrichtung 222 ausgeführt.

Bei einem Cache-Miss dauert es eine gewisse Zeitspanne, bis das Cache-Speicherzellenfeld 21 durchsucht worden ist und festgestellt wird, daß die angeforderten Daten nicht im Speicherzellenfeld 21 vorhanden sind. Anschließend verstreicht Zeit, bis der externe Speicher 3 zu einem Auslesen von Daten bereit ist. Während dieser Zeit ist der Stromverbrauch niedrig. Danach jedoch sind eine Vielzahl von Schaltvorgängen erforderlich, um die vom externen Speicher 3 bereitgestellten Daten in den Cache-Speicher 21 einzulesen und der CPU 1 bereitzustellen. Der Stromverbrauch ist entsprechend hoch. Bei einem Cache-Hit stehen die angeforderten Daten relativ schnell zur Verfügung, so daß der Stromverbrauch unmittelbar nach der Anforderung hoch ist, aber nur kurze Zeit anhält.

Um Rückschlüsse auf den Programmablauf aufgrund des von außen meßbaren Stromverbrauchs unmöglich zu machen, werden zusätzliche Cache-Miss-Ereignisse bei einer Anfrage an den Speicher eingefügt. Auch wenn die Trefferlogik 221 feststellt, daß ein Cache-Hit vorliegt, wird die Anfrage so behandelt, als ob ein Cache-Miss vorgelegen hätte. Dies bedeutet, daß ein Zugriff auf den externen Speicher 3 erfolgt und der Cache-Speicher 21 nachgeladen wird. Anstelle eines Stromprofils für den Cache-Hit ergibt sich das charakteristische Stromprofil für einen Cache-Miss. Hierzu ist im Cache-Controller 22 ein Umschalter oder Multiplexer 223 vorgesehen, dessen Umschaltsignal R von einem Zufallsgenerator 224 bereitgestellt wird. Der Umschalter 223 schaltet zwischen dem Signal HM aus der Trefferlogik und einem Signal M um, welches einen Cache-Miss anzeigt. Dies bedeutet, daß in Abhängigkeit von dem vom Zufallsgenerator 224 zufällsmäßig bereitgestellten Bit des Umschaltsignals R an die CPU 1 bei einem Speicherzugriff ein Cache-Miss-Ereignis übermittelt wird. Auch wenn die Trefferlogik 221 einen Cache-Hit ermittelt hat, wird der CPU 1 ein Cache-Miss mitgeteilt, wenn der Umschalter 223 auf das Signal M umgeschaltet ist.

Zwischen den Zufallsgenerator 224 und den Umschalter 223 ist zweckmäßigerweise noch eine Zufallssteuerung 225 geschaltet. Die Zufallssteuerung 225 modifiziert das vom Zufallsgenerator 224 erzeugte Zufallssignal in vorteilhafter Weise.

Die Zufallssteuerung 225 sorgt in einer Ausführung dafür, daß zwischen Cache-Misses und Cache-Hits innerhalb einer vorgegebener Zeitdauer eine Gleichverteilung vorliegt. Hierzu erstellt die Zufallssteuerung 225 eine Statistik, bei der die Anzahl der Cache-Miss- und Cache-Hit-Ereignisse protokolliert wird. Es werden nun so viele zusätzliche Cache-Miss-Zugriffe eingeführt, daß innerhalb des vorgegebenen Zeitraums die Anzahl der Cache-Hits und die Anzahl der Cache-Misses je einem vorgegebenen Wert entspricht. Der für die Anzahl der Cache-Misses und Cache-Hits eingestellte Vorgabewert kann gleich oder verschieden voneinander sein. Über die Betriebszeit gesehen ergibt sich nach außen hin für Cache-Misses und Cache-Hits eine Gleichverteilung. Es sind dementsprechend viele Cache-Misses zusätzlich einzufügen, daß sich der jeweilige Vorgabewert für die Anzahl von Cache-Misses und Cache-Hits pro vorgegebenem Zeitintervall einstellt. Aus dem Stromprofil kann dann kein Rückschluß mehr auf den Kontrollfluß der Soft-/Firmware des Mikroprozessors gezogen werden. Die Einfügung zusätzlicher Cache-Misses erfolgt auch bei dieser Ausführung zufallsgesteuert.

In einer anderen Ausführung bewirkt die Zufallssteuerung 225 eine von der Auslastung der CPU 1 abhängige Einfügung von zusätzlichen Cache-Misses. Hierzu wird in der CPU 1 ein Signal erzeugt, welches der Zufallssteuerung 225 zugeführt wird und den momentanen Auslastungsgrad der CPU 1 angibt. Wenn die CPU 1 gering ausgelastet ist, wird die Cache-Miss-Rate, d.h. die Anzahl der notwendigen und zusätzlichen Cache-Miss-Ereignisse pro vorgegebenen Zeitintervall, angehoben. Bei hoher Auslastung hingegen soll die Rechenleistung nicht weiter durch langsame Speicherzugriffe belastet werden, so daß die Cache-Miss-Rate reduziert wird. In jedem Fall erfolgt die Einfügung von zusätzlichen Cache-Miss-Ereignissen, d.h. solche, die trotz eines von der Trefferlogik 221 festgestellten Cache-Hits ausgeführt werden, in zufälliger Weise gesteuert durch den Zufallsgenerator 224. Bei niedriger Cache-Miss-Rate wird die Abhörsicherheit mittels Stromprofilmessung zwar verringert, dem Mikroprozessorsystem steht aber demgegenüber ausreichend hohe Rechenleistung zur Verfügung, um die abgearbeitete Applikation auszuführen. Über die Software wird ein jeweils an die Applikation angepaßter Kompromiß zwischen Rechenleistung und Sicherheit individuell konfiguriert.

Obwohl die vorgenannten Ausführungsbeispiele im Zusammenhang mit einem Lesezugriff beschrieben worden sind, kann die Erfindung ebenfalls auf einen über den Cache-Speicher abgewikkelten Schreibzugriff ausgedehnt werden. Bei einem Schreiben von Daten in den externen Speicher 3 wird zuerst überprüft, ob die zu schreibenden Daten bereits im Cache-Speicher 21 vorhanden sind. Bei einem Cache-Hit braucht der Prozessor die Daten nicht gesondert an den externen Speicher 3 zu übertragen. Vielmehr übernimmt dies die Cache-Steuerung 22 unter Anwendung der im Cache-Speicher 21 gespeicherten Schreibdaten. Auch hier wird entsprechend den obigen Ausführungen an die CPU 1 anstelle eines tatsächlich vorliegenden Cache-Hits ein Cache-Miss mitgeteilt. Auch hier ist über die Zufallssteuerung 225 eine Modifikation des vom Zufallsgenerator 224 erzeugten Zufallssignals möglich. Es können bei Schreibzugriffen Cache-Misses und Cache-Hits in einem vorgegebenen Zeitraum protokolliert und entsprechend einem Vorgabewert als eine Gleichverteilung gemittelt über den Zeitraum eingestellt werden, wobei dementsprechend viele zusätzlichen Cache-Misses eingefügt werden. Andererseits ist es möglich, die Cache-Miss-Rate entsprechend der Rechenleistung des Systems bei höherer Auslastung zu erniedrigen und bei niedriger Auslastung zu erhöhen.

## Patentansprüche

1. Verfahren zum Zugriff eines Mikroprozessors (1) auf einen Speicher (3), bei dem ein Cache-Speicher (21) vorgesehen ist, in dem Teile des Inhaltes des Speichers (3) zwischenspeicherbar sind, bei dem der Mikroprozessor (1) einen gespeicherten Datenwert anfordert, bei dem festgestellt wird, ob der angeforderte gespeicherte Datenwert im Cache-Speicher (21) enthalten ist, und bei dem dann, wenn der Datenwert im Cache-Speicher (21) nicht enthalten ist, der Datenwert aus dem Speicher (3) ausgelesen wird, und bei dem ein Steuersignal (R) erzeugt wird, das dann, wenn der Datenwert im Cache-Speicher (21) enthalten ist, in Abhängigkeit des Steuersignals (R) den Datenwert entweder aus dem Cache-Speicher (21) oder aus dem Speicher (3) ausliest,
**dadurch gekennzeichnet,**
**daß** das Steuersignal (R) in zufallsgesteuerter Weise erzeugt wird.

2. Verfahren nach Anspruch 1,
**dadurch gekennzeichnet,**
**daß** ein Signal (HM) erzeugt wird, welches angibt, daß der Datenwert im Cache-Speicher (21) enthalten ist, daß ein Signal (M) erzeugt wird, das angibt, daß der Datenwert nicht im Cache-Speicher (21) enthalten ist, und daß zwischen diesen Signalen (HM; M) in Abhängigkeit vom Steuersignal umgeschaltet wird.

3. Verfahren nach Anspruch 1 oder 2,
**dadurch gekennzeichnet,**
**daß** eine erste Anzahl der Auslesevorgänge aus dem Cache-Speicher (21) und eine zweite Anzahl der Auslesevorgänge aus dem Speicher (3) in einem vorgegebenen Zeitraum ermittelt wird, und daß das Steuersignal (R) derart erzeugt wird, daß die Anzahlen jeweils im wesentlichen einem vorgegebenen Wert entsprechen.

4. Verfahren nach einem der Ansprüche 1 bis 3,
**dadurch gekennzeichnet,**
**daß** ein Signal erzeugt wird, welches ein Maß für den Auslastungsgrad des Mikroprozessors (1) ist, daß eine Anzahl der Auslesevorgänge aus dem Speicher in einem vorgegebenen Zeitintervall ermittelt wird, und daß das Steuersignal (R) derart erzeugt wird, daß bei durch das Signal angezeigtem höheren Auslastungsgrad die Anzahl der Auslesevorgänge aus dem Speicher (3) niedrigem ist als bei niedrigem Auslastungsgrad.

5. Verfahren nach einem der Ansprüche 1 bis 4,
**dadurch gekennzeichnet,**
**daß** nach dem Auslesen des Datenwertes aus dem Speicher (3) der Datenwert in den Cache-Speicher (21) geschrieben wird.

6. Schaltungsanordnung zur Durchführung des Verfahrens nach einem der Ansprüche 1 bis 5,
**gekennzeichnet durch**
eine zentrale Verarbeitungseinheit (1), einen Speicher (3), einen Cache-Speicher (21) und eine Steuerungseinrichtung (22), die mit der zentralen Verarbeitungseinheit (1) und dem Cache-Speicher (21) verbunden ist, wobei die Steuerungseinrichtung enthält: einen Zufallsgenerator (224) zur Erzeugung eines zufallsgesteuerten Signals, eine Einrichtung zur Feststellung (221), ob ein von der zentralen Verarbeitungseinheit (1) angefragter Datenwert im Cache-Speicher (21) enthalten ist oder nicht, einen Anschluß (226) zur Bereitstellung eines Signals (M), das angibt, daß der Datenwert nicht im Cache-Speicher (21) enthalten ist, und eine Umschalteinrichtung (223), die vom Zufallsgenerator (224) steuerbar ist, und die eingangsseitig mit dem Anschluß (226) und der Einrichtung zur Feststellung (221) verbunden ist, und ausgangsseitig mit der zentralen Verarbeitungseinheit (1) gekoppelt ist, um ein Auslesen entweder aus dem Speicher (3) oder aus dem Cache-Speicher (21) in Abhängigkeit von einem von der Umschalteinrichtung (223) an die zentrale Verarbeitungseinrichtung (1) übermittelten Signal zu steuern.

7. Schaltungsanordnung nach Anspruch 6,
**gekennzeichnet durch**
eine weitere Steuerungseinrichtung (222), **durch** die ein aus dem Speicher (3) ausgelesener Datenwert in den Cache-Speicher (21) geschrieben wird, die von der Umschalteinrichtung (223) ausgangsseitig steuerbar ist.

8. Schaltungsanordnung nach einem der Ansprüche 6 oder 7,
**dadurch gekennzeichnet,**
**daß** der Zufallsgenerator (224) eine Steuerung (225) umfaßt, durch die das zufallsgesteuerte Signal in Abhängigkeit von der Anzahl von Zugriffen von der zentralen Verarbeitungseinheit (1) auf den Speicher (3) und/oder der Anzahl der Zugriffe der zentralen Verarbeitungseinheit (1) auf den Cache-Speicher (21) steuerbar ist.

## Claims

1. Method for a microprocessor (1) to access a memory (3), in which a cache store (21) is provided which buffer-stores parts of the content of the memory (3), in which the microprocessor (1) requests a stored data value, in which it is established whether the requested stored data value is held in the cache store (21), and in which if the data value is not held in the cache store (21) then the data value is read from the memory (3), and in which a control signal (R) is produced which, if the data value is held in the cache store (21), takes the control signal (R) as a basis for reading the data value either from the cache store (21) or from the memory (3),
**characterized**
**in that** the control signal (R) is produced under random control.

2. Method according to Claim 1,
**characterized**
**in that** a signal (HM) is produced which indicates that the data value is held in the cache store (21), in that a signal (M) is produced which indicates that the data value is not held in the cache store (21), and in that a switch is made between these signals (HM; M) on the basis of the control signal.

3. Method according to Claim 1 or 2,
**characterized**
**in that** a first number of read operations from the cache store (21) and a second number of read operations from the memory (3) in a prescribed period are ascertained, and in that the control signal (R) is produced such that the numbers respectively correspond essentially to a prescribed value.

4. Method according to one of Claims 1 to 3,
**characterized**
**in that** a signal is produced which is a measure of the utilization level of the microprocessor (1), in that a number of read operations from the memory in a prescribed time interval is ascertained, and in that the control signal (R) is produced such that when the utilization level indicated by the signal is relatively high the number of read operations from the memory (3) is lower than when the utilization level is low.

5. Method according to one of Claims 1 to 4,
**characterized**
**in that** after the data value has been read from the memory (3) the data value is written to the cache store (21).

6. Circuit arrangement for carrying out the method according to one of Claims 1 to 5,
**characterized by**
a central processing unit (1), a memory (3), a cache store (21) and a control device (22) which is connected to the central processing unit (1) and to the cache store (21), where the control device contains: a random number generator (224) for producing a random-controlled signal, a device for establishing (221) whether or not a data value requested by the central processing unit (1) is held in a cache store (21), a connection (226) for providing a signal (M) which indicates that the data value is not held in the cache store (21), and a changeover device (223) which can be controlled by the random number generator (224) and whose input is connected to the connection (226) and to the establishment device (221), and whose output is coupled to the central processing unit (1) in order to control reading either from the memory (3) or from the cache store (21) on the basis of a signal transmitted from the changeover device (223) to the central processing device (1).

7. Circuit arrangement according to Claim 6,
**characterized by**
a further control device (222) which writes a data value which has been read from the memory (3) to the cache store (21) and which can be controlled by the output of the changeover device (223).

8. Circuit arrangement according to one of Claims 6 or 7,
**characterized**
**in that** the random number generator (224) comprises a controller (225) which can control the random-controlled signal on the basis of the number of access operations from the central processing device (1) to the memory (3) and/or the number of access operations from the central processing unit (1) to the cache store (21).

## Revendications

1. Procédé permettant à un microprocesseur (1) d'accéder à une mémoire (3), dans lequel
il est prévu une mémoire cache (21) dans laquelle peuvent être mémorisées provisoirement des parties du contenu de la mémoire (3),
le microprocesseur (1) demande une valeur de données en mémoire,
on détermine si la valeur de données en mémoire qui est demandée est contenue dans la mémoire cache (21),
la valeur de données est lue dans la mémoire (3) seulement si la valeur de données n'est pas contenue dans la mémoire cache (21),
un signal de commande (R) est généré, et
la valeur de données est lue dans la mémoire cache (21) ou dans la mémoire (3) en fonction du signal de commandes (R) seulement si la valeur de données est contenue dans la mémoire cache (21),
**caractérisé en ce que** le signal de commande (R) est généré aléatoirement.

2. Procédé selon la revendication 1, **caractérisé en ce qu'**il est généré un signal (HM) qui indique que la valeur de données est contenue dans la mémoire cache (21), **en ce qu'**il est généré un signal (M) qui indique que la valeur de données n'est pas contenue dans la mémoire cache (21), et **en ce que** l'on commute entre ces signaux (HM ; M) en fonction du signal de commande.

3. Procédé selon la revendication 1 ou 2, **caractérisé en ce qu'**un premier nombre de processus de lecture dans la mémoire cache (21) et un deuxième nombre de processus de lecture dans la mémoire (3) sont déterminés dans une fenêtre temporelle prescrite, et **en ce que** le signal de commande (R) est généré de telle sorte que les nombres correspondent chacun sensiblement à une valeur prescrite.

4. Procédé selon l'une des revendications 1 à 3, **caractérisé en ce qu'**un signal est généré qui est une mesure du taux d'utilisation du microprocesseur (1), **en ce qu'**un nombre de processus de lecture dans la mémoire est déterminé dans un intervalle de temps prescrit, et **en ce que** le signal de commande (R) est généré de telle sorte que le nombre de processus de lecture dans la mémoire (3) est plus petit lorsque le taux d'utilisation indiqué par le signal est grand que lorsque le taux d'utilisation est petit.

5. Procédé selon l'une des revendications 1 à 4, **caractérisé en ce que** la valeur de données est écrite dans la mémoire cache (21) après avoir lu la valeur de données dans la mémoire (3).

6. Agencement de circuits permettant de mettre en oeuvre le procédé selon l'une des revendications 1 à 5, **caractérisé par** une unité centrale de traitement (1), une mémoire (3), une mémoire cache (21) et un dispositif de commande (22) qui est relié à l'unité centrale de traitement (1) et à la mémoire cache (21), le dispositif de commande comprenant : un générateur aléatoire (224) permettant de générer un signal aléatoire, un dispositif de détermination (221) permettant de déterminer si une valeur de données demandée par l'unité centrale de traitement (1) est contenue ou non dans la mémoire cache (21), une borne (226) permettant de délivrer un signal (M) qui indique que la valeur de données n'est pas contenue dans la mémoire cache (21), et un dispositif de commutation (223) qui peut être commandé par le générateur aléatoire (224) et qui est relié du côté de l'entrée à la borne (226) et au dispositif de détermination (221), et qui est couplé du côté de la sortie à l'unité centrale de traitement (1) afin de commander une lecture soit dans la mémoire (3) soit dans la mémoire cache (21) en fonction du signal transmis par le dispositif de commutation (223) au dispositif centrale de traitement (1).

7. Agencement de circuits selon la revendication 6, **caractérisé par** un autre dispositif de commande (222), qui permet d'écrire dans la mémoire cache (21) une valeur de données lue dans la mémoire (3) et qui peut être commandé du côté de la sortie par le dispositif de commutation (223).

8. Agencement de circuits selon l'une des revendications 6 ou 7, **caractérisé en ce que** le générateur aléatoire (224) comporte une commande (225) qui permet de commander le signal aléatoire en fonction du nombre d'accès à la mémoire (3) effectués par l'unité centrale de traitement (1) et/ou du nombre d'accès à la mémoire cache (21) effectués par l'unité centrale de traitement (1).
